# EUROPEAN PATENT SPECIFICATION

(11) **EP 1 304 256 B1**
(45) Date of publication and mention of the grant of the patent: **19.01.2005**
(21) Application number: 02022862.3
(22) Date of filing: 14.10.2002
(51) Int. Cl.: B60N 2/36, B60N 2/30

(54) **A tiltable rear seat for a motor vehicle**
Umklappbarer Hintersitz für Kraftfahrzeuge
Siège arrière rabattable pour véhicules automobiles

(30) Priority: 18.10.2001 IT TO20010990
(43) Date of publication of application: 23.04.2003
(73) Proprietor: ITALDESIGN-GIUGIARO S.p.A, 10121 Torino (IT)
(72) Inventor: Sito, Andrea, 10137 Torino (IT)
(74) Representative: Quinterno, Giuseppe

(56) References cited:
- EP-A- 0 689 954
- EP-A- 0 899 152
- EP-A- 1 068 988
- DE-A- 19 842 824
- DE-C- 19 943 891
- FR-A- 1 577 124
- US-A- 4 227 736

## Description

The present invention relates to a seat for a rear row of a motor vehicle of the type defined in the preamble of Claim 1.

A seat of the above-mentioned type is known from European patent application EP 0 899 152, from which Figure 1 of the appended drawings is taken.

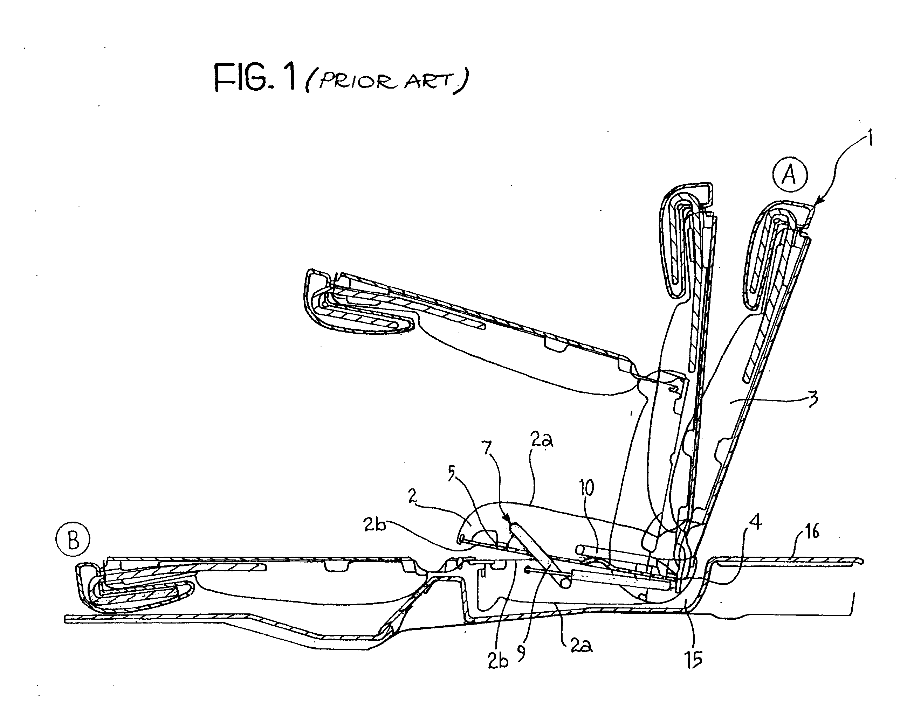

With reference to Figure 1, a seat 1 for the third row of a motor vehicle comprises basically a seat cushion 2 and a seat backrest 3 hinged thereto about an axis 4, and can be moved from a normal-use position A, in which the seat is capable of receiving a person, to a non-use position B, in which the seat forms a loading area substantially flat and aligned with the vehicle floor.

The seat 1 is provided with a double-lever driving mechanism 7 comprising a pair of rotating levers 9 and 10 mounted on the sides of the seat cushion 2 to allow the cushion to rotate about 180° forward and, at the same time, shift a predetermined extent backward. The levers 9 e 10 have their respective upper ends articulated to a body 5 for support of the seat cushion 2 and their respective lower ends articulated to a bracket-like sheet member (not visible in Figure 1) attached inside a lower room 15 of a vehicle floor 16. The movement of the seat from position A to position B controlled by the mechanism 7 involves the seat cushion 2 being completely overturned and put in the room 15 with its cushion surface 2a facing downward and its lower surface 2b facing upward and arranged substantially in alignment with the vehicle floor 16 and the seat backrest 3.

It is an object of the present invention to provide an improved seat compared to the above-discussed prior art, which can be moved easily between the use position and the non-use position and takes up as little room as possible inside the passenger compartment when it is in the non-use position, in order to ensure the greatest load capacity on board of the vehicle.

This object is fully achieved according to the present invention by a seat as defined in the characterising portion of Claim 1.

The invention will be illustrated in detail hereinafter purely by way of non-limiting example, with reference to the appended drawings, in which:
- Figure 1 is a view sectioned along a longitudinal vertical plane of a seat according to the prior art, in which its limit positions, that is, the use position and the non-use position, and two intermediate positions between said limit positions are shown;
- Figure 2 is a perspective view illustrating schematically a pair of seats according to the present invention, the one in the use position and the other in the non-use position;
- Figures 3 to 14 are side-elevation schematic views illustrating in succession some of the different positions assumed by a seat according to the present invention when it is moved from the use position to the non-use position.

In the description and the claims which follow, terms such as "front" or "rear", "upper" or "lower", "longitudinal" or "transverse" are to be intended as referred to the mounted condition on the motor vehicle.

For clear reasons of simplicity, only one of the two symmetric parts constituting the structure of the seat in question will be described, remaining obviously understood that the non-described part is to be considered as identical, or substantially identical, to the one described.

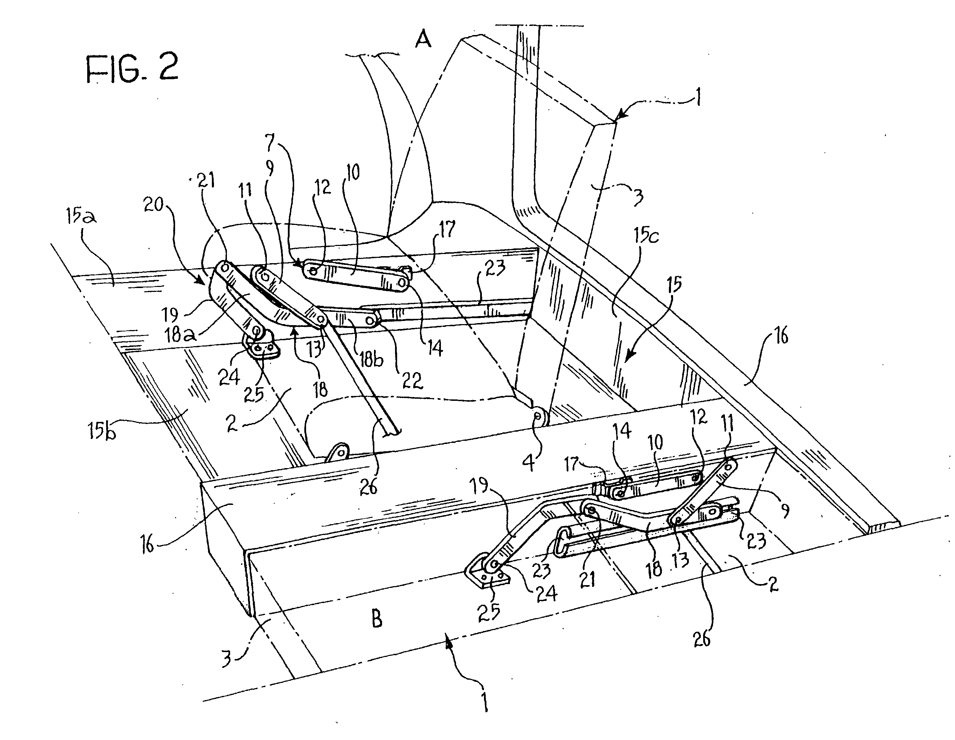

In Figure 2, where parts and elements identical or similar to those in Figure 1 (prior art) have been given the same reference numerals, a pair of seats 1 for a rear row of a motor vehicle are illustrated, each of the seats being of the type comprising a seat cushion 2 and a seat backrest 3 hinged thereto about an axis 4. The seats 1 are arranged, respectively, in a first position A, or use position, in which the seat is capable of receiving an occupant, and in a second position B, or non-use position, in which the seat is disposed upside-down inside a room 15 of the vehicle floor 16 with its upper surface substantially aligned with the loading platform of the vehicle.

As in the above-discussed prior art, in order to move the seat 1 between the use position A and the non-use position B a double-lever mechanism 7 is provided on each side of the seat cushion 2, which mechanism comprises a front rotating lever 9 and a rear rotating lever 10 the upper ends 11 and 12 of which (with reference to the use position A illustrated in Figure 2) are articulated to the seat cushion 2. The lower end 14 of the rear lever 10 is articulated to a respective bracket 17, for example, attached to a side wall 15a of the room 15, whereas the lower end 13 of the front lever 9 is articulated at an intermediate point to a connecting rod 18 which forms, together with a crank 19, a crank mechanism 20 associated to the mechanism 7.

The connecting rod 18 is articulated at a front end 21 to the crank 19 and is provided at the rear end with a slider 22 slidable in a substantially longitudinal direction along a straight guide 23 attached to the side wall 15a of the room 15. As can be clearly observed in Figure 2, due to reasons of size and correct operation of the seat driving system, the connecting rod 18 has preferably a non-straight shape, with a first and a second straight segment 18a and 18b, respectively, inclined at an obtuse angle relative to each other, whereby the first segment 18a is arranged adjacent and substantially parallel to the front lever 9 of the mechanism 7 when the seat 1 is in the use position A. In this case, the point 13 of articulation of the lever 9 to the connecting rod 18 is positioned on the second straight segment 18b of the rod.

The crank 19 is articulated to a bracket 25 arranged in the room 15, for example, attached to a bottom plane 15b of this room, at a front end 24 opposite to the end articulated to the connecting rod 18. Also the crank 19 has a preferably non-straight shape, with two straight segments inclined at an obtuse angle relative to each other.

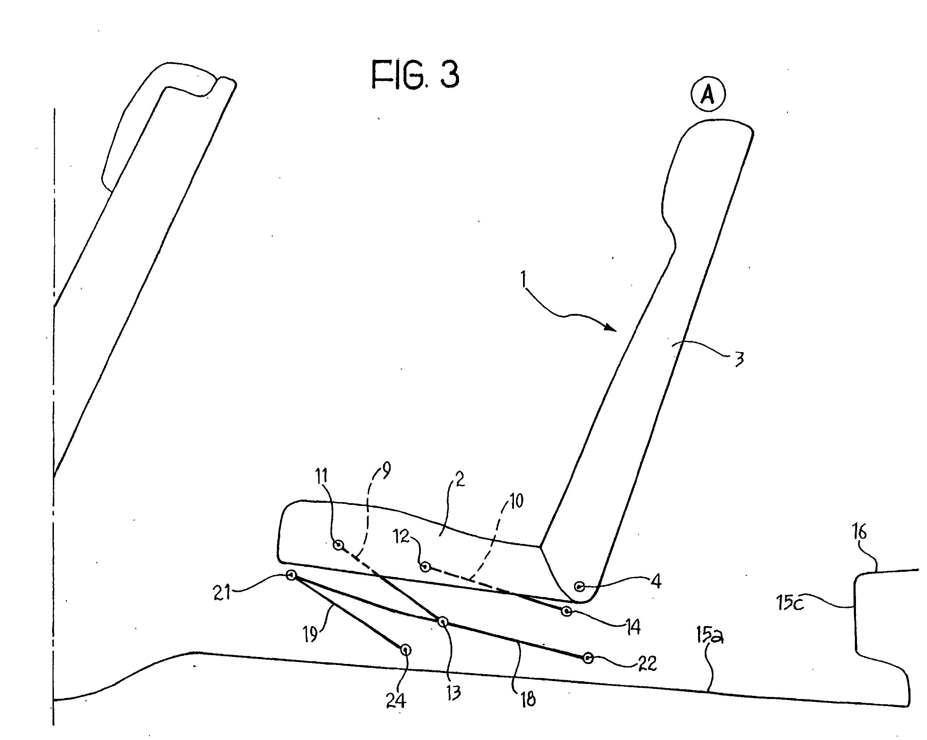

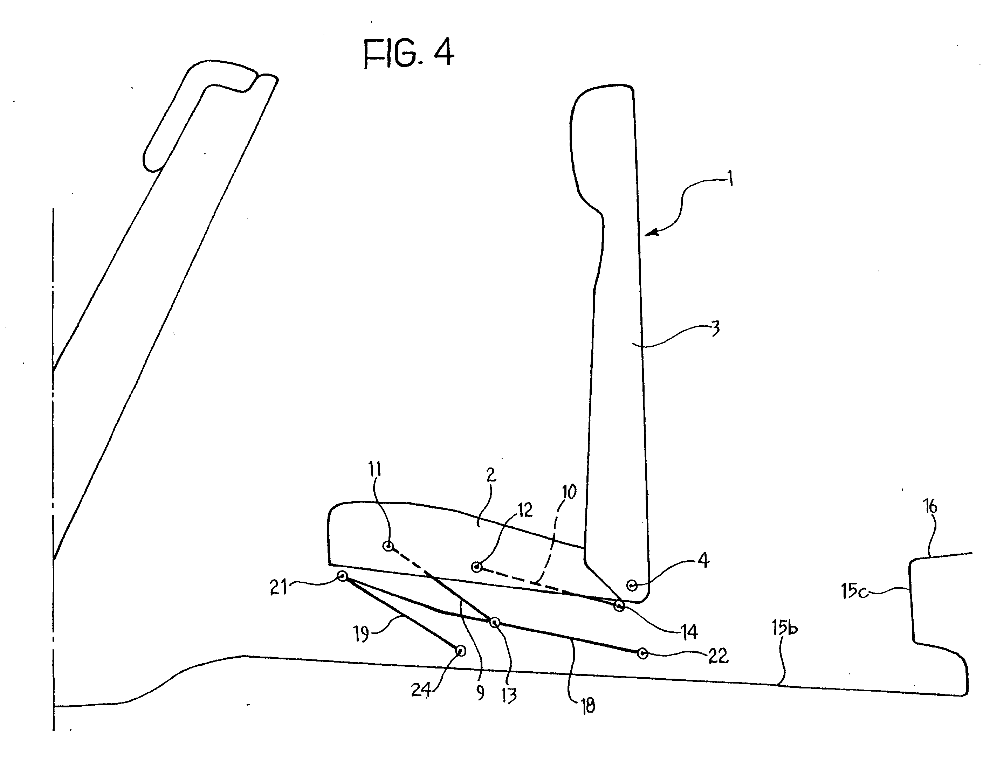

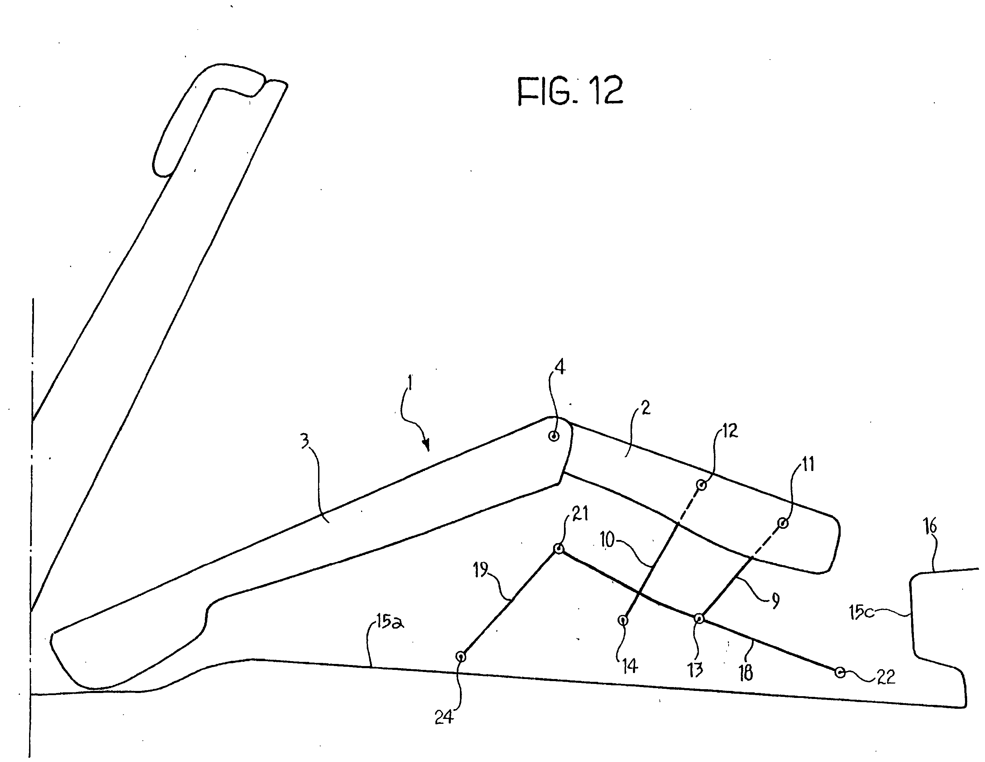

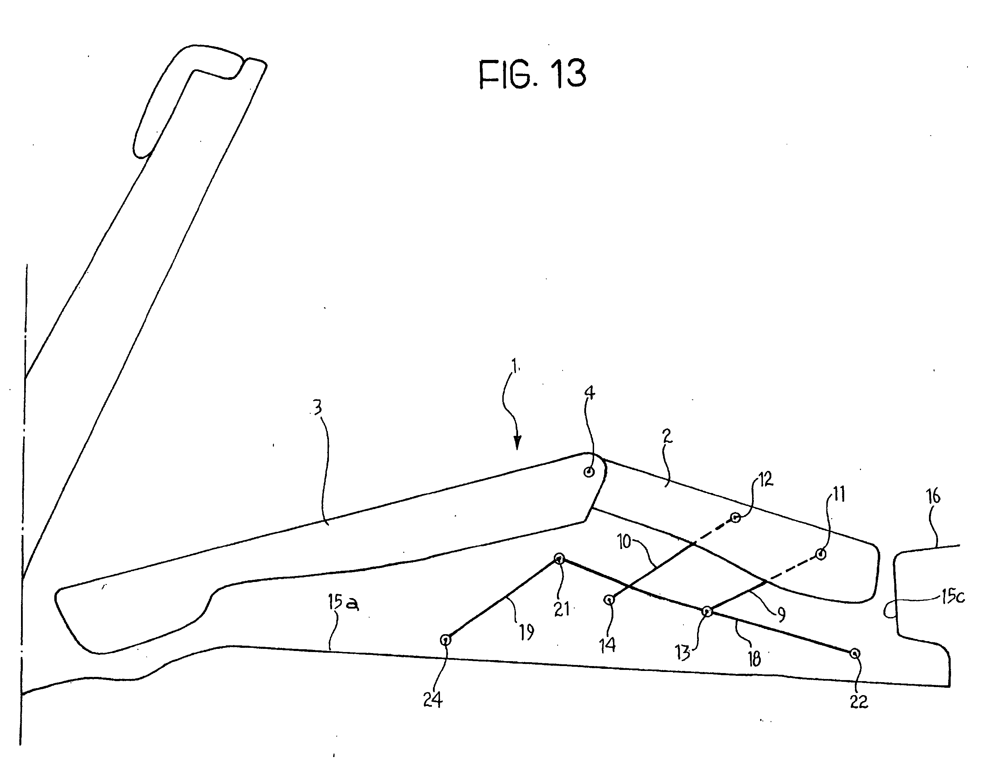

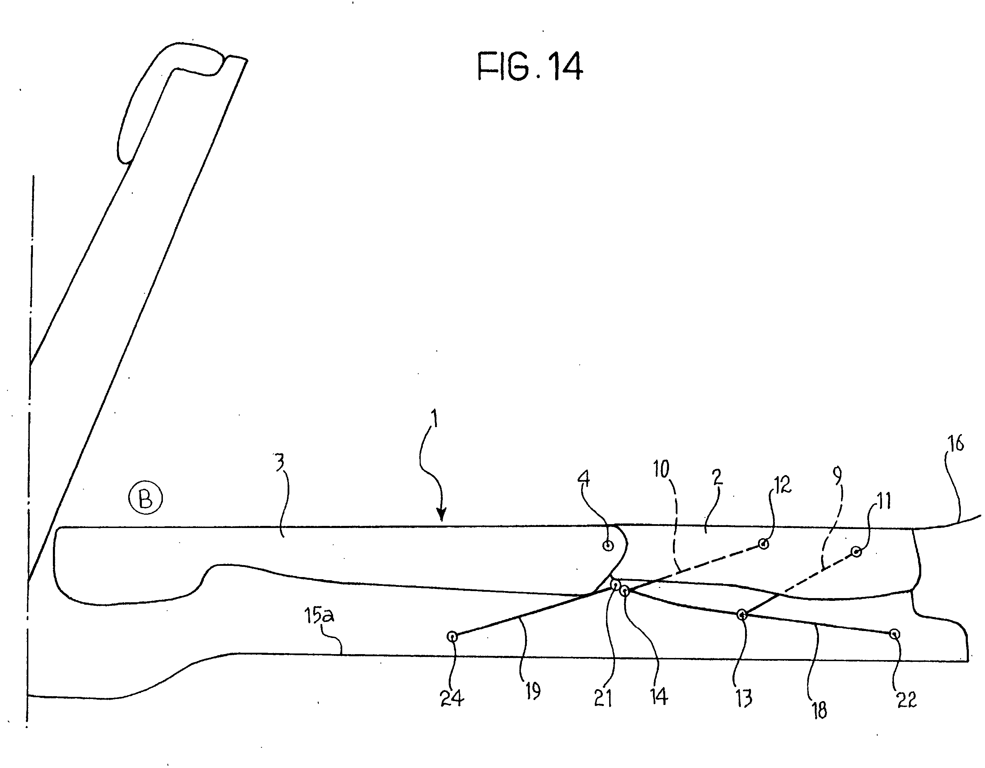

The double-lever mechanism 7 and the crank mechanism 20 are arranged to form a driving device for moving the seat between the use position A (Figure 3) and the non-use position B (Figure 14) through a continuous movement, illustrated in Figure 4 to 13, which requires only one initial control by the user.

The two driving devices, each comprising a double-lever mechanism 7 and a crank mechanism 20, are arranged specularly at the opposite sides of each seat 1 and are also interconnected advantageously by means of a transverse rod 26 (Figure 2), the lateral ends of which are fixed at the points of articulation 13. The use of the transverse rod 26 assures the synchronous operation of the two driving devices of each seat, thus facilitating the movement between the two positions A and B and avoiding the risk of jamming.

Now, by referring to Figures 4 to 13, it will be described how the seat is moved from the use position A to the non-use position B according to the invention.

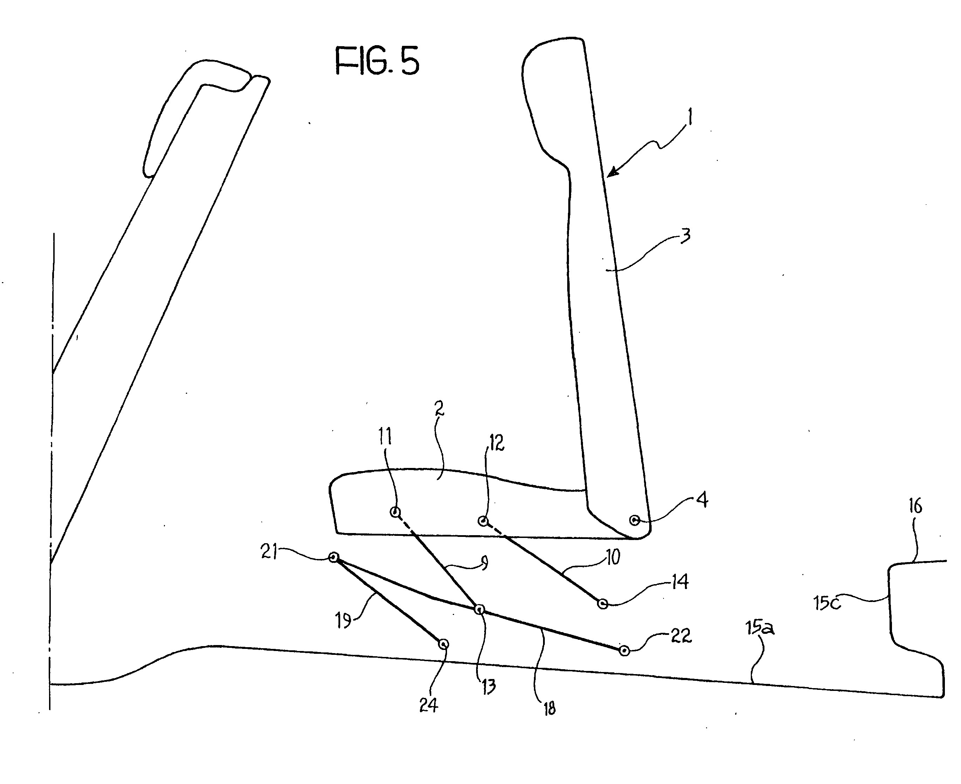

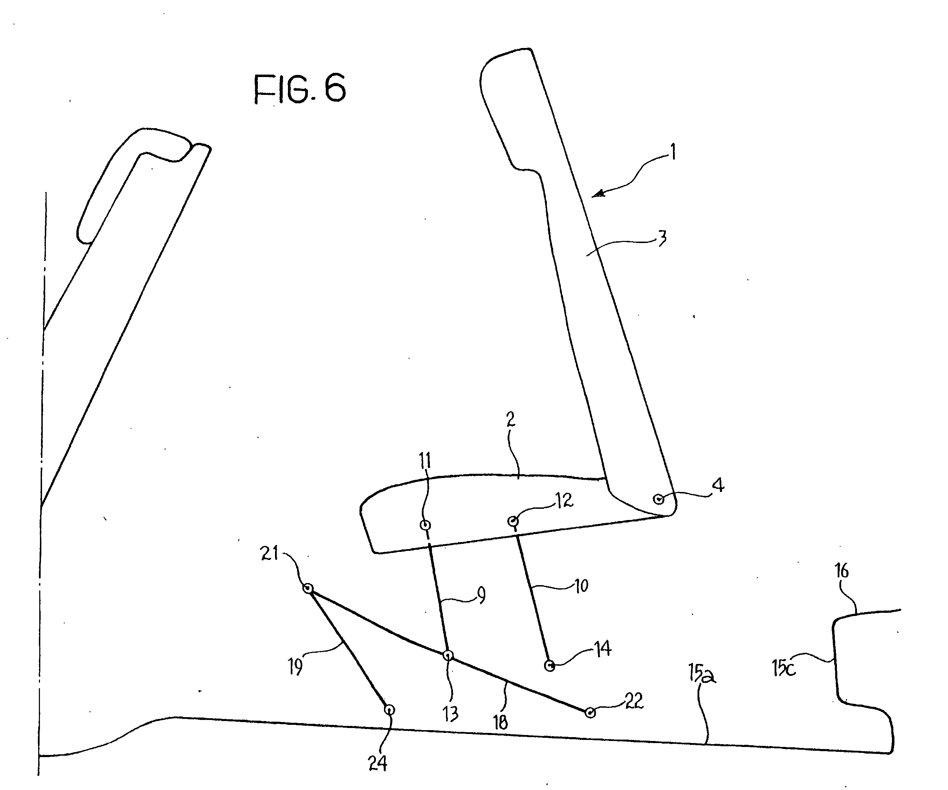

First of all, the seat backrest 3 of the seat 1 is rotated frontward about the axis 4 of articulation to the seat cushion 2 (Figure 4), until it assumes a substantially vertical orientation. Then, by pulling (or pushing) the seat backward, the seat is caused to lift and move back (Figures 5 and 6) mainly by virtue of the clockwise rotation of the rotating levers 9 and 10 of the mechanism 7, the levers rotating initially almost synchronously and remaining substantially parallel to each other. At the same time, also the crank mechanism 20 is set in motion, though lightly, by virtue of the backward push that the lever 9 acting as a push-rod exerts on the crank 19 through the hinge 13. As the rotating levers 9 and 10 move towards a vertical position corresponding to an upper dead point of the mechanism 7, the backward movement of the seat tends to prevail on the lift movement.

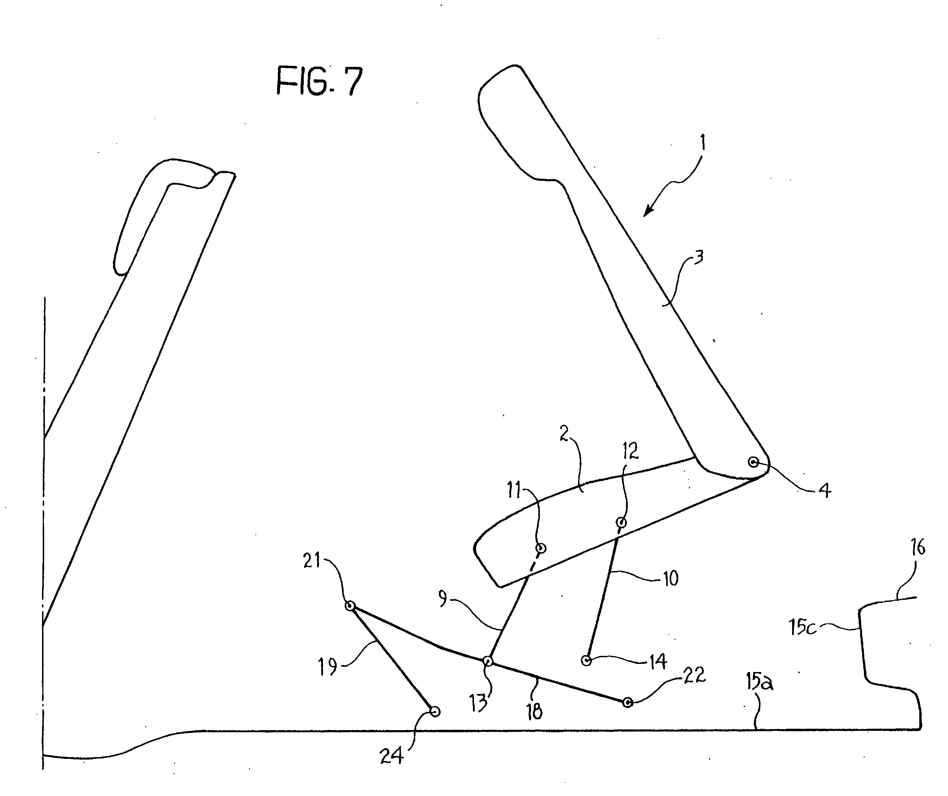

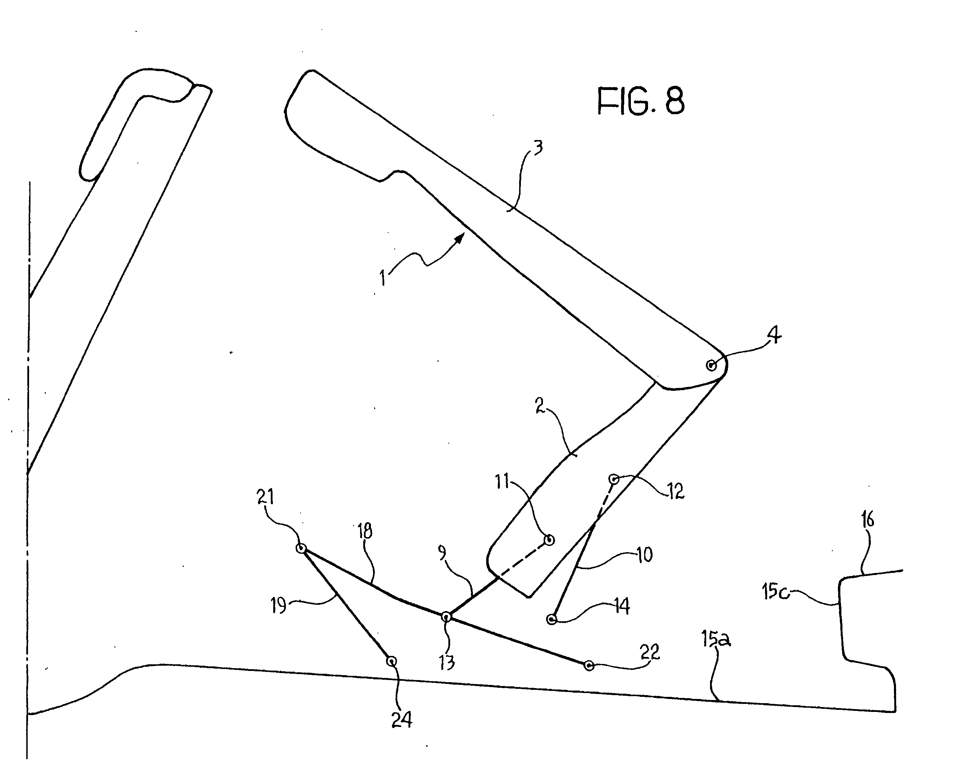

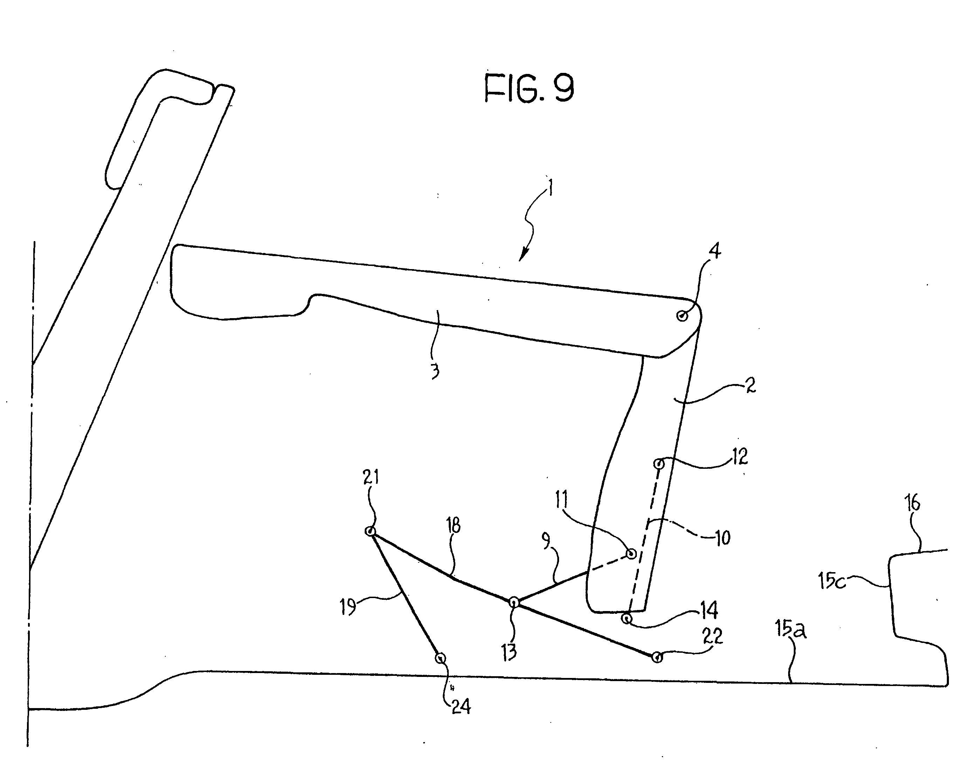

When the upper dead point of the mechanism 7 is passed (Figures 7 and 8), the seat starts to rotate anticlockwise and overturn frontward since the front lever 9 is shorter than the rear lever 10 and therefore rotates faster. Thus, while the point 11 of articulation of the lever 9 tends to align vertically with the point 12 of articulation of the lever 10, the seat cushion 2 reaches a substantially vertical position (Figure 9), whereas the seat backrest 3 is in a substantially horizontal position with the headrest abutting with the seat backrest of the seat of the adjacent front row.

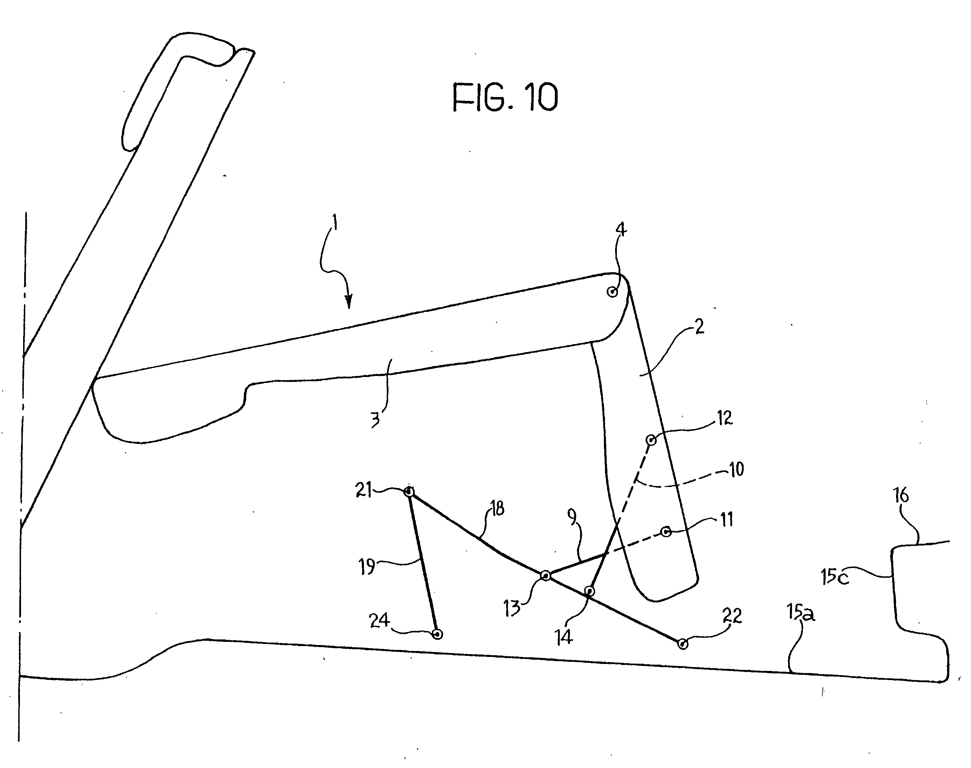

At the same time as the rotation of the seat cushion 2, which takes place substantially about the end 12 of the lever 10 (which stands essentially still during this phase), the backward movement of the end 11 of the lever 9 drags with itself the connecting rod 18 (Figure 10) through the lever 9, now acting as a pull-rod.

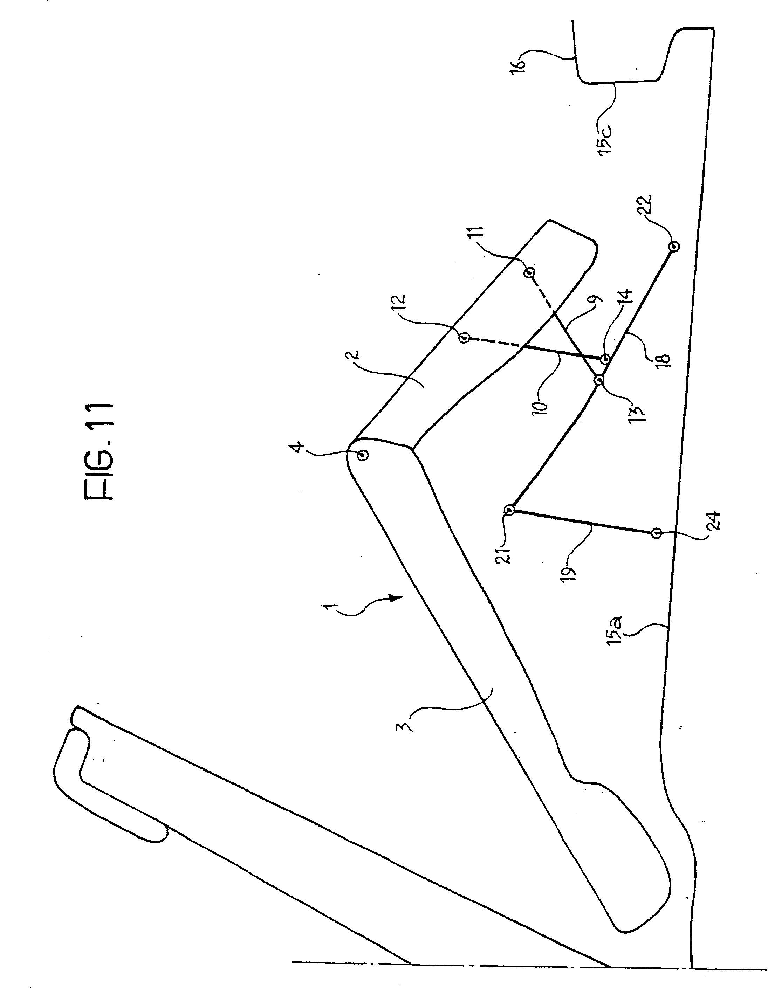

Then, the seat cushion 2 continues to rotate and move backward (Figures 11, 12 and 13) until it achieves at the end a completely overturned position, in which it abuts with the rear vertical wall 15c of the room 15 (Figure 14) and has its lower surface 2b aligned with the vehicle floor 16. By referring again to Figures 11 to 13, it can be seen also that an opening movement of the seat backrest 3 relative to the seat cushion takes place at the same time as the overturning of the seat cushion 2, due to the relative rotation of the two elements about the hinge axis 4, Therefore, at the end of the movement of the seat, the seat backrest 3 is aligned with the seat cushion 2 and the floor 16 to form a single loading platform.

The movement of the seat in the opposite direction, that is, from the non-use position B to the normal-use position A, takes place symmetrically.

Compared to the seats of known construction, a seat according to the invention gives the advantage of enabling an increase in the load capacity inside the motor-vehicle passenger compartment, when the seat is in the non-use position, and of being easily movable between the use position and the non-use position.

According to the prior art discussed in the introductory part of the present specification, following the movement of the seat from the use position to the non-use position, the seat cushion is only overturned 180 degrees, but remains substantially in the same longitudinal position. Therefore, due to the reduced free space between the two rows of seats it is necessary either to move at first the front seat in the non-use position, for example, by closing its cushion and backrest against each other, or to cause the seat backrest to pass below the seat cushion of the front seat during the movement from the use position to the non-use position. Such a necessity reduces unavoidably the ease and quickness of movement of the seat.

According to the invention, this drawback is eliminated by virtue of that the crank mechanism 20, in co-operation with the double-lever mechanism 7, causes a backward movement of the seat which reduces significantly the free space between the two rows of seats required for the overturning of the rear seat.

A further important advantage of the invention is that only one initial control is necessary to move the seat between the use and non-use positions, since the different movements of lifting, overturning and backward shifting of the seat cushion and of overturning of the seat backrest take place automatically in succession, just by virtue of the special arrangement of the driving system.

Naturally, the principle of the invention remaining unchanged, embodiments and manufacturing details may vary widely from those described and illustrated purely by way of non-limiting example.

## Claims

1. A seat (1) for a rear row of a motor vehicle, of the type comprising a seat cushion (2) and a seat backrest (3) articulated (4) to each other and arranged to be moved between a use position (A), in which the seat is capable of receiving an occupant, and a non-use position (B), in which the seat forms a loading area substantially flat and aligned with the vehicle floor (16); wherein a pair of driving devices are provided at the sides of the seat cushion (2) in order to move the seat between the above positions (A, B); each device comprising a double-lever mechanism (7) with a front rotating lever (9) and a rear rotating lever (10); each of the levers (9, 10) having an end articulated (11, 12) to the seat cushion (2); the rear lever (10) being also arranged rotatably about a first fixed point (14);
**characterised in that** each driving device comprises also a crank mechanism (20) with a connecting rod (18) and a crank (19), associated to the double-lever mechanism (7); wherein the crank (19) is arranged rotatably about a second fixed point (24) and is articulated (21) to the connecting rod (18), and the connecting rod (18) is provided, at the opposite end from the that articulated to the crank (19), with a slider (22) slidable in a substantially longitudinal direction along a respective straight guide (23); the connecting rod (18) being also articulated to the front lever (9) of the associated mechanism (7) in an intermediate point (13) between its ends (21, 22).

2. A seat according to Claim 1, **characterised in that** the front lever (9) of the double-lever mechanism (7) is shorter than the rear lever (10), so that the front lever rotates faster than the rear lever as a result of the backward movement of the seat, thus causing a forward rotation of the seat cushion (2).

3. A seat according to Claim 1 or 2, **characterised in that** the connecting rod (18) of the crank mechanism (20) has first and second substantially straight segments (18a, 18b) inclined at an obtuse angle relative to each other, wherein the said first segment is adjacent and substantially parallel to the front lever (9) of the double-lever mechanism (7) when the seat is in the use position (A).

4. A seat according to Claim 3, **characterised in that** also the crank (19) of the crank mechanism (20) has a substantially obtuse-angled shape.

5. A seat according to any of the preceding claims, **characterised in that** the two driving devices are arranged to move the seat (1) between the use and non-use positions (A, B) through a continuous movement as a result of a single initial control imparted by the user.

6. A seat according to any of the preceding claims, **characterised in that** the two driving devices are interconnected by means of a transverse rod (26), the lateral ends of which are fixed at the above points of articulation (13).

7. A seat according to Claim 1, **characterised in that** in the use position (A) the seat is arranged above a room (15) provided in the vehicle floor (16), whereas in the non-use position (B) the seat is entirely accommodated in the room (15) and substantially aligned with the seat cushion (2), with the seat cushion (2) overturned and the seat backrest (3) horizontally arranged.

8. A seat according to Claim 7, **characterised in that** each straight guide (23) for guiding the sliding movement of the slider (22) of the respective connecting rod (18) is attached to a lateral vertical wall (15a) of the room (15).

## Patentansprüche

1. Sitz (1) fiir eine hintere Sitzreihe eines Kraftfahrzeugs von der Art, umfassend ein Sitzkissen (2) und eine Sitzlehne (3), die gelenkig miteinander verbunden (4) und dazu eingerichtet sind, zwischen einer Verwendungsposition (A), in welcher der Sitz einen Insassen aufnehmen kann, und einer Nicht-Verwendungsposition (B), in welcher der Sitz eine im Wesentlichen flache und mit dem Fahrzeugboden (16) fluchtende Ladefläche bildet, bewegt zu werden; wobei an den Seiten des Sitzkissens (2) ein Paar von Steuervorrichtungen vorgesehen ist, um den Sitz zwischen den obigen Positionen (A, B) zu bewegen; wobei jede Vorrichtung einen Doppelhebelmechanismus (7) mit einem vorderen Drehhebel (9) und einem hinteren Drehhebel (10) umfasst; jeder Hebel (9, 10) mit einem Ende gelenkig am Sitzkissen (2) angebracht ist (11, 12); und der hintere Hebel (10) auch drehbar um einen ersten Fixpunkt (14) angeordnet ist;
**dadurch gekennzeichnet, dass** jede Steuervorrichtung auch einen Kurbelmechanismus (20) mit einer Verbindungsstange (18) und einer Kurbel (19) umfasst, welcher mit dem Doppelhebelmechanismus (7) verbunden ist; wobei die Kurbel (19) drehbar um einen zweiten Fixpunkt (24) angeordnet und gelenkig an der Verbindungsstange (18) angebracht ist (21); und die Verbindungsstange (18) mit jenem Ende, das dem gegenüberliegt, welches gelenkig an der Kurbel (19) angebracht ist, mittels eines Schiebers (22) entlang einer jeweiligen geraden Führung (23) im Wesentlichen in Längsrichtung verschiebbar ist; und die Verbindungsstange (18) an einer zwischen ihren Enden (21, 22) liegenden Stelle (13) auch gelenkig am vorderen Hebel (9) des dazugehörigen Mechanismus (7) angebracht ist.

2. Sitz gemäß Anspruch 1, **dadurch gekennzeichnet, dass** der vordere Hebel (9) des Doppelhebelmechanismus (7) kürzer als der hintere Hebel (10) ist, so dass sich der vordere Hebel infolge der Rückwärtsbewegung des Sitzes schneller als der hintere Hebel dreht, wodurch eine Vorwärtsdrehung des Sitzkissens (2) bewirkt wird.

3. Sitz gemäß Anspruch 1 oder 2, **dadurch gekennzeichnet, dass** die Verbindungsstange (18) des Kurbelmechanismus (20) ein erstes und ein zweites im Wesentlichen gerades Segment (18a, 18b) aufweist, welche im stumpfen Winkel zueinander gerichtet sind, wobei das erste Segment dem vorderen Hebel (9) des Doppelhebelmechanismus (7) benachbart und im Wesentlichen parallel zu diesem ist, wenn sich der Sitz in der Verwendungsposition (A) befindet.

4. Sitz gemäß Anspruch 3, **dadurch gekennzeichnet, dass** auch die Kurbel (19) des Kurbelmechanismus (20) eine im Wesentlichen stumpfwinkelige Form aufweist.

5. Sitz gemäß einem der vorhergehenden Ansprüche, **dadurch gekennzeichnet, dass** die beiden Steuervorrichtungen dazu eingerichtet sind, den Sitz (1) durch eine konstante Bewegung zwischen der Verwendungs- und der Nicht-Verwendungsposition (A, B) zu bewegen, und zwar infolge einer einzigen anfänglichen, vom Benutzer ausgeübten Bedienung.

6. Sitz gemäß einem der vorhergehenden Ansprüche, **dadurch gekennzeichnet, dass** die beiden Steuervorrichtungen durch eine Querstange (26) miteinander verbunden sind, deren Seitenenden an den obenstehenden Gelenkverbindungsstellen (13) fixiert sind.

7. Sitz gemäß Anspruch 1, **dadurch gekennzeichnet, dass** der Sitz in der Verwendungsposition (A) über einem im Fahrzeugboden (16) vorgesehenen Raum (15) angeordnet ist, während der Sitz in der Nicht-Verwendungsposition (B) völlig im Raum (15) aufgenommen und im Wesentlichen mit dem Sitzkissen (2) fluchtend ist, wobei das Sitzkissen (2) umgeschlagen und die Sitzlehne (3) horizontal platziert ist.

8. Sitz gemäß Anspruch 7, **dadurch gekennzeichnet, dass** jede gerade Führung (23) zum Lenken der Gleitbewegung des Schiebers (22) der jeweiligen Verbindungsstange (18) an einer vertikalen Seitenwand (15a) des Raums (15) angebracht ist.

## Revendications

1. Siège (1) pour une rangée arrière d'un véhicule automobile, du type comprenant un coussin de siège (2) et un dossier de siège (3) articulés (4) l'un avec l'autre et arrangés de manière à être déplacés entre une position d'utilisation (A), dans laquelle le siège peut recevoir un occupant, et une position de non-utilisation (B), dans laquelle le siège forme une zone de chargement sensiblement plate et alignée sur le sol du véhicule (16) ; dans lequel une paire de dispositifs d'entraînement sont prévus au niveau des côtés du coussin de siège (2) afin de déplacer le siège entre les positions précédentes (A, B) ; chaque dispositif comprenant un mécanisme à double levier (7) avec un levier rotatif avant (9) et un levier rotatif arrière (10) ; chacun des leviers (9, 10) ayant une extrémité articulée (11, 12) avec le coussin de siège (2) ; le levier arrière (10) étant aussi arrangé de manière rotative autour d'un premier point fixe (14) ;
**caractérisé en ce que** chaque dispositif d'entraînement comprend aussi un mécanisme à manivelle (20) avec une bielle (18) et une manivelle (19), associé au mécanisme à double levier (7) ; dans lequel la manivelle (19) est arrangée de manière rotative autour d'un second point fixe (24) et est articulée (21) avec la bielle (18), et la bielle (18) est prévue, au niveau de l'extrémité opposée à partir de celle qui est articulée avec la manivelle (19), avec un coulisseau (22) pouvant glisser dans une direction sensiblement longitudinale le long d'un guide droit respectif (23); la bielle (18) étant aussi articulée avec le levier avant (9) du mécanisme associé (7) dans un point intermédiaire (13) entre ses extrémités (21, 22).

2. Siège selon la revendication 1, **caractérisé en ce que** le levier avant (9) du mécanisme à double levier (7) est plus court que le levier arrière (10), de sorte que le levier avant tourne plus vite que le levier arrière en conséquence du mouvement vers l'arrière du siège, causant de cette manière une rotation vers l'avant du coussin de siège (2).

3. Siège selon la revendication 1 ou 2, **caractérisé en ce que** la bielle (18) du mécanisme à manivelle (20) a des premier et second segments sensiblement droits (18a, 18b) inclinés à un angle obtus l'un par rapport à l'autre, dans lequel ledit premier segment est adjacent et sensiblement parallèle au levier avant (9) du mécanisme à double levier (7) quand le siège est dans la position d'utilisation (A).

4. Siège selon la revendication 3, **caractérisé en ce que** aussi la manivelle (19) du mécanisme à manivelle (20) a une forme sensiblement d'angle obtus.

5. Siège selon l'une quelconque des revendications précédentes, **caractérisé en ce que** les deux dispositifs d'entraînement sont arrangés pour déplacer le siège (1) entre les positions d'utilisation et de non-utilisation (A, B) par un mouvement continu en résultat d'une unique commande initiale transmise par l'utilisateur.

6. Siège selon l'une quelconque des revendications précédentes, **caractérisé en ce que** les deux dispositifs d'entraînement sont interconnectés au moyen d'une tige transversale (26), dont les extrémités latérales sont fixées au niveau des points précédents d'articulation (13).

7. Siège selon la revendication 1, **caractérisé en ce que** dans la position d'utilisation (A) le siège est arrangé au-dessus d'un espace (15) prévu dans le sol du véhicule (16), alors que dans la position de non-utilisation (B) le siège est entièrement logé dans l'espace (15) et sensiblement aligné avec le coussin de siège (2), avec le coussin de siège (2) retourné et le dossier de siège (3) arrangé horizontalement.

8. Siège selon la revendication 7, **caractérisé en ce que** chaque guide droit (23) pour guider le mouvement de glissement du coulisseau (22) de la bielle respective (18) est fixé à une paroi verticale latérale (15a) de l'espace (15).
